Europäisches Patentamt

European Patent Office

Office européen des brevets

(19)

(11) Veröffentlichungsnummer: **0 327 549**
**B1**

(12) **EUROPÄISCHE PATENTSCHRIFT**

(45) Veröffentlichungstag der Patentschrift: **08.08.90**

(21) Anmeldenummer: **87906744.5**

(22) Anmeldetag: **16.10.87**

(86) Internationale Anmeldenummer:
**PCT/EP87/00609**

(87) Internationale Veröffentlichungsnummer:
**WO 88/02821 21.04.88 Gazette 88/09**

(51) Int. Cl.⁵: **F 04 D 29/12**

(54) KREISELPUMPE ZUR FÖRDERUNG HEISSER MEDIEN.

(30) Priorität: **17.10.86 DE 8627766 u**

(43) Veröffentlichungstag der Anmeldung:
**16.08.89 Patentblatt 89/33**

(45) Bekanntmachung des Hinweises auf die
Patenterteilung:
**08.08.90 Patentblatt 90/32**

(84) Benannte Vertragsstaaten:
**AT BE CH DE FR GB IT LI NL SE**

(56) Entgegenhaltungen:
**DE-A-1 946 401**
**DE-A-2 140 959**
**DE-A-3 012 711**
**DE-A-3 137 692**
**DE-A-3 438 662**
**FR-A-2 288 241**
**GB-A-1 174 767**
**US-A-2 910 313**
**US-A-3 560 063**

(73) Patentinhaber: **Sihi GmbH & Co KG**
**Lindenstrasse 170**
**D-2210 Itzehoe (DE)**

(72) Erfinder: **MÜLLER, Hermann**
**Hauptstrasse 4**
**D-2211 Oldendorf (DE)**
Erfinder: **LEHMANN, Wilfried**
**Steckfortkamp 10**
**D-2210 Heiligenstedten (DE)**
Erfinder: **MANN, Ralf**
**Hauptstrasse 4**
**D-2211 Huje (DE)**

(74) Vertreter: **Glawe, Delfs, Moll & Partner**
**Patentanwälte**
**Postfach 26 01 62 Liebherrstrasse 20**
**D-8000 München 26 (DE)**

EP 0 327 549 B1

**Beschreibung**

Die Erfindung bezieht sich auf eine Kreiselpumpe zur Förderung heißer Flüssigkeiten mit mindestens einem Wellendurchtritt durch das Pumpengehäuse nach außen, der mit einer Gleitringdichtung versehen ist, die innerhalb eines die geförderte Flüssigkeit enthaltenden Dichtungsraums angeordnet ist, der von dem Pumpengehäuse durch eine Distanzstrecke mit engem Wellenspiel getrennt ist und Mittel zur Erzeugung einer Flüssigkeitszirkulation innerhalb des Dichtungsraums zum Spülen des Gleitflächenbereichs der Gleitringdichtung umfaßt.

Hoch beanspruchte Gleitringdichtungen werden gespült, um die im Gleitflächenbereich anfallende Wärme abzuführen. Bei der eingangs genannten, bekannten Pumpe (DE—A—21 40 959) wird die Spülung durch Flüssigkeitszirkulation innerhalb des Dichtungsraums bewirkt. Dafür ist auf einem umlaufenden Teil der Gleitringdichtung ein Fördergewinde vorgesehen, das mit dem engen Dichtungsgehäuse zusammenwirkt und eine Axialströmung im Dichtungsraum erzeugt, die durch einen die Enden des Dichtungsraums verbindenden Kanal so zurückgeführt wird, daß sie auf den Gleitflächenbereich der Gleitringdichtung trifft. Die vom Spülstrom aufgenommene Wärme wird im Bereich des Zurückführungskanals an die Umgebungsluft abgegeben. Wärmezufuhr durch Flüssigkeitsaustausch mit dem Förderstrom der Pumpe ist dadurch praktisch ausgeschlossen, daß der Dichtungsraum nur über einen engen Wellenspalt mit der Pumpe in Verbindung steht.

Diese Anordnung ist geeignet für Flüssigkeiten wie Wärmeträgeröl. Bei der Verwendung für Heißwasser haben sich jedoch Schwierigkeiten an der Gleitringdichtung ergeben. Die Erfindung umfaßt die Erkenntnis der dafür maßgebenden Gründe. Auch wenn der Dichtungsraum bei Begriebsbeginn vollständig mit Heißwasser gefüllt ist, kann sich nach und nach Gas daraus abscheiden, das sich im Dichtungsraum sammelt. Dieser Vorgang endet nicht, wenn die im Dichtungsraum befindliche Flüssigkeitsmenge ihren Gasinhalt abgegeben hat, weil ständig ein sehr geringer Flüssigkeitsaustausch mit der Pumpe stattfindet und daher auch ständig kleine Gasmengen abgeschieden werden, die konstruktionsbedingt aus dem Dichtungsraum nicht herausgespült werden können. Infolge der Zentrifugalwirkung der im Dichtungsraum mit der Gleitringdichtung rotierenden Flüssigkeit neigt das abgeschiedene Gas dazu, sich an der Gleitringdichtung zu sammeln und die dort erforderliche Spülwirkung zu stören. Kühlung und Schmierung des Gleitflächenbereichs werden dadurch gefährdet.

Dieses Problem tritt nicht auf bei gattungsfremden Pumpen, bei denen der Dichtungsraum in Spülverbindung mit dem Förderstrom steht, weil dann etwaige Abscheidungen ebenso wie feste Fremdteilchen aus dem Dichtungsraum abgeführt werden. So ist eine Pumpe bekannte (DE—A—34 38 662), bei der der Dichtungsraum durch einen ersten Kanal mit einem Bereich hohen Drucks und durch einen zweiten Kanal mit einem Bereich geringen Drucks der Pumpe in Verbindung steht. Bei einer anderen bekannten Pumpe (DE—A—31 37 692) ist durch Ausbildung einer Rohrwand innerhalb des Dichtungsraums ein Zirkulationsweg gebildet, der zum Wegspülen von Fremdstoffen, wie Sand, von der Gleitringdichtung dient. Dabei bleibt offen, in welcher Weise der Dichtungsraum mit dem Pumpenraum verbunden ist. Da aber nicht anzunehmen ist, daß der Dichtungsspülstrom die Fremdstoffe anreichern und zur Gleitringdichtung zurückführen darf, muß eine Spülverbindung mit dem Pumpenraum vorhanden sein.

Schließlich ist bekannt (FR—A—2 288 241), den vom Pumpenraum durch einen engen Wellenspalt getrennten Dichtungsraum mit einer oben angeordneten Spül- und Reinigungsöffnung zu versehen, die zur Entfernung von Gasansammlungen im Stillstand der Pumpe geeignet wäre; jedoch fehlt ein entsprechender Verwendungshinweis.

Der Erfindung liegt daher die Aufgabe zugrunde, basierend auf der oben erläuterten Erkenntnis, eine Kreiselpumpe der im Oberbegriff des Anspruchs 1 genannten Art für die Verwendung gashaltiger Flüssigkeiten geeignet zu machen.

Die erfindungsgemäße Lösung besteht in der Kombination der Merkmale, daß
—Mittel zur Beruhigung der Flüssigkeitszirkulation in Entfernung von der Gleitringdichtung,
—ein großvolumiger, strömungsberuhigter, entlüftbarer Aufnahmeraum für abgeschiedenes Gas und
—Einrichtungen zum Entfernen von angesammeltem Gas vorgesehen sind.

Das erste Funktionselement der Erfindung besteht in der intensiven Strömungsbeaufschlagung mindestens des Gleitflächenbereichs des Gleitringdichtung, um Gasblasen, die sich an der Gleitringdichtung festsetzen oder in deren Bereich sammeln, von dort zu entfernen. Dafür wird auf die bekannten Spüleinrichtungen zurückgegriffen.

Ein zweites Funktionselement der Erfindung besteht in der Beruhigung der Flüssigkeitszirkulation in Entfernung von der Gleitringdichtung zu dem Zweck, die Abscheidung der von der Gleitringdichtung abgeführten Gasblasen zu ermöglichen.

Es kann in einer dem Fachmann bekannten Weise verwirklicht werden, insbesondere durch Bereitstellung von großen Strömungsquerschnitten in Entfernung von der Gleitringdichtung.

Schließlich besteht ein Funktionselement der Erfindung darin, daß ein hinreichend großvolumiger Aufnahmeraum für abgeschiedenes Gas bereitgestellt wird, der vorzugsweise im oberen Bereich des Dichtungsraums liegt. Er muß so strömungsberuhigt sind, daß das dort befindliche Gas nicht wieder in die Zirkulation hineingerissen wird. Er muß ferner entlüftbar sein, damit zumindest periodisch das Gas abgeführt werden kann.

Es sei angemerkt, daß eine Verbindung zwischen den Teilen des Zirkulationsweges, in denen die Gasabscheidung stattfindet, und dem Gasaufnahmeraum vorhanden sein muß, damit das Gas aus dem Strömungskreislauf in den Aufnahmeraum gelangen kann.

Bei einer gattungsfremden Pumpe (GB—A—1 174 767), deren Dichtungsraum vertikal oberhalb des Pumpenraums angeordnet ist, ist es zur Erhaltung der Selbstansaugefähigkeit der Pumpe bekannt, den zentralen Laufradbereich durch große Bohrungen mit dem Dichtungsraum zu verbinden, damit im Laufrad sich sammelnde Gasblasen in den Dichtungsraum und von dort durch eine Entlüftungsleitung, die ggf. an eine Vakuumpumpe angeschlossen ist, abgeführt werden könne. Damit das Gas aus dem Dichtungsraum abgeführt werden kann, enthält dieser von außen radial nach innen zur Dichtung vorragende Rippen, die die im Dichtungsraum enthaltene Flüssigkeit an Rotation hindern, so daß das Gas sich von der Flüssigkeit scheiden und im oberen Teil des Dichtungsraums, wo die Entlüftungsleitung angeschlossen ist, sammeln kann. Der Gleitflächenbereich der Dichtung befindet sich ebenfalls in diesem oberen Teil des Dichtungsraums auf gleicher Höhe mit dem Anschluß der Entlüftungsleitung. Bei der Lösung des der Erfindung zugrunde liegenden Problems, die Betriebsschwierigkeiten der gattungsgemäßen Pumpe beim Einsatz für bestimmte Flüssigkeiten zu vermeiden, konnte die bekannte Anordnung kein Vorbild sein, weil sie gatttungsfremd ist und kein Anlaß bestand, nach Anregungen unter bekannten Einrichtungen zur Erhaltung der Selbstansaugefähigkeit von Pumpen zu suchen. Auch ist die bekannte Anordnung insofern irreleitend, also sie zur Ansammlung von Gas im Gleitflächenbereich der Dichtung führt und damit gerade dijenigen Schwierigkeiten herausfordert, die durch die Erfindung zu vermeiden sind.

Vorzugsweise ist das Dichtungsgehäuse in einen inneren und einen äußeren Berich unterteilt, die gemeinsam den Zirkulationsweg bilden und die mindestens eine Verbindung nahe der Gleitfläche der Gleitringdichtung sowie eine davon axial entfernt liegende Verbindung aufweisen. Die Unterteilung kann durch eine Wand erfolgen, die im wesentlichen rohrförmig sein kann und die—wie erwähnt—an sich bekannt ist. Sie kann sich aber auch, wie weiter unten erläutert wird, durch andere Mittel ergeben, die keine Wand zwischen den Bereichen vorsehen.

Die intensive Strömungsbeaufschlagung der Gleitringdichtung kann erfindungsgemäß dadurch verbessert werden, daß wenigstens eine bis auf geringe Entfernung (beispielsweise 1 bis 2 mm) an den Gleitringdichtungsumfang herangeführte Rippe vorgesehen ist, deren innere Kante eine heftige Turbulenz am Dichtungsumfang bewirkt, die die dort befindlichen Gasblasen losreißt, so daß sie mit der Flüssigkeitszirkulation abgeführt werden können. Dazu hat es sich auch als vorteilhaft erwiesen, wenn die Rippe unterhalb der Wellenhöhe, also im geodätisch unterem Bereich des Dichtungsraums, angeordnet ist und/oder schräg zur Axialrichtung verläuft.

Es kann genügen, wenn nur eine solche Rippe vorgesehen ist, insbesondere, wenn der innere und der äußere Bereich des Dichtungsraums durch eine Rohrwand voneinander getrennt sind. Sie kann auch in Mehrzahl ohne besondere Trennung zwischen den beiden Bereichen von der Dichtungsraumwand an die Gleitringdichtung heranragen, wodurch zwischen den einzelnen Rippen und der Dichtungsraumbegrenzung Kammern gebildet sind, die nahe der Gleitringdichtung einen inneren, engen Bereich und außen einen weiten Bereich bilden, so daß die Zirkulationsströmung innen am Umfang der Gleitringdichtung und insbesondere an den Rippen rasch und turbulent und außen beruhigt verläuft.

Die Rippen können Durchbrechungen enthalten, damit das zwischen ihnen abgeschiedene Gas zum Gasaufnahmeraum hochsteigen kann.

Wenn der innere und der äußere Bereich des Dichtungsraums durch eine im wesentlichen rohrförmige Wand getrennt sind, kann—wie an sich bekannt—zur Intensivierung der Zirkulation ein Fördergewinde vorgesehen sein, das zwischen der Wand und einem mit der Gleitringdichtung rotierenden Teil wirkt. Dadurch wird vor allem während der Anfahrphase der Pumpe eine intensive Durchströmung erreicht, die für eine vollständige und rasche Entsagung sorgt.

Der Gasaufnahmeraum bzw. die Strömungsberuhigung darin kann durch eine im äußeren Bereich des Dichtungsraums, vorzugsweise in dessen oberen Bereich, gelegene, mindestens eine quer zur Umfangsrichtung verlaufende Rippe gebildet werden, die zweckmäßigerweise in Drehrichtung der Pumpe gesehen vor dem oberen Scheitelpunkt liegt, beispielsweise bei ca. 45°. In dem berihigten Raum hinter der Rippe kann sich das Gas sammeln. Die Rippe sollte einen kleinen Durchtrittsquerschnitt frei lassen, der den Durchtritt des Gases zum Aufnahmeraum ermöglicht, ohne die Strömungsberühigung zu beeinträchtigen. Diesen kleine Durchtrittsquerschnitt wird vorteilhafterweise von einem Spalt zwischen der Rippe und der Außenbegrenzung des die Rippe enthaltenden Teilbereichs gebildet.

Nach einem weiteren Merkmal der Erfindung ist der Dichtungsraum an einen Bereich hohen Drucks im Druckbereich der Pumpe angeschlossen. Wenn der Dichtungsraum außerdem mit einem Bereich niedrigeren Drucks der Pumpe verbunden ist, ist in dieser letzteren Verbindung zweckmäßigerweise eine Drossel vorgesehen, die beispielsweise von einem Gleitlager gebildet sein kann, das zwischen der Pumpe und der Distanzstrecke liegt. Die Verbindung mit dem Bereich hohen Drucks der Pumpe kann durch eine besondere Umführungsleitung hergestellt sein. Diese Anordnung bewirkt, daß im Gleitringdichtungsraum ein Druck erzielt wird, der etwa dem hohen Druck in der Pumpe entspricht. Voraussetzung dafür ist, daß die Drosselwirkung der Umführungsleitung deutlich geringer ist als die Drosselwirkung des Gleitlagers bzw. der Drosselstrecke. Man erreicht dadurch, daß das Medium im Gleitringdichtungsraum einen größeren Abstand zum Siedezustand bekommt und daher ein sichererer Betrieb der Gleitringdichtung möglich ist.

Es ist nicht erforderlich, daß das gesamte Gasaufnahmevolumen innerhalb des Dichtungsraums gelegen ist. Vielmehr kann nach der Erfindung an dem Dichtungsraum ein Entlüftungstopf angeordnet sein, der zusätzliches Aufnahmevolumen zur Verfügung stellt und mit Entlüftungseinrichtungen versehen ist. Auch in diesem Fall muß aber in Übereinstimmung mit den obigen Ausführungen innerhalb des Dichtungsraums ein äußerer, strömungsberuhigter Aufnahmeraum für abgeschiedenes Gas vorhanden sein, von dem aus das Gas in den Entlüftungstopf gelangen kann.

Die Entlüftungseinrichtung können selbsttätig oder manuell betätigbar sein. Die Entlüftung sollte selbstverständlich dort erfolgen, wo sich das Gas sammelt, im allgemeinen am geodätisch höchstgelegenen Punkt. Ferner kann (können) im Dichtungsraum bzw. Entlüftungstopf ein Sensor (oder mehrere) zur Überwachung der Betriebsverhältnisse enthalten sein. Dadurch läßt sich beispielsweise die notwendige Entlüftung des Dichtungsraums steuern oder das Pumpenaggregat bei Gefahr für die Gleitringdichtung abschalten.

Die Erfindung wird im folgenden anhand der in der Zeichnung dargestellten Ausführungsbeispiele beschrieben. Darin zeigen:

Fig. 1 einen Längsschnitt durch die Pumpe

Fig. 2 einen Längsschnitt durch eine erste Ausführungsform der Dichtungsanordnung

Fig. 3 einen Querschnitt gemäß Linie A—A der Fig. 2

Fig. 4 einen Längsschnitt durch eine zweite Ausführungsform der Dichtungsanordung,

Fig. 5 einen Querschnitt gemäß Linie B—B der Fig. 4

Fig. 6 einen Längsschnitt durch eine dritte Ausführungsform eines Dichtungsgehäuses und

Fig. 7 einen Querschnitt längs Linie C—C der Fig. 6.

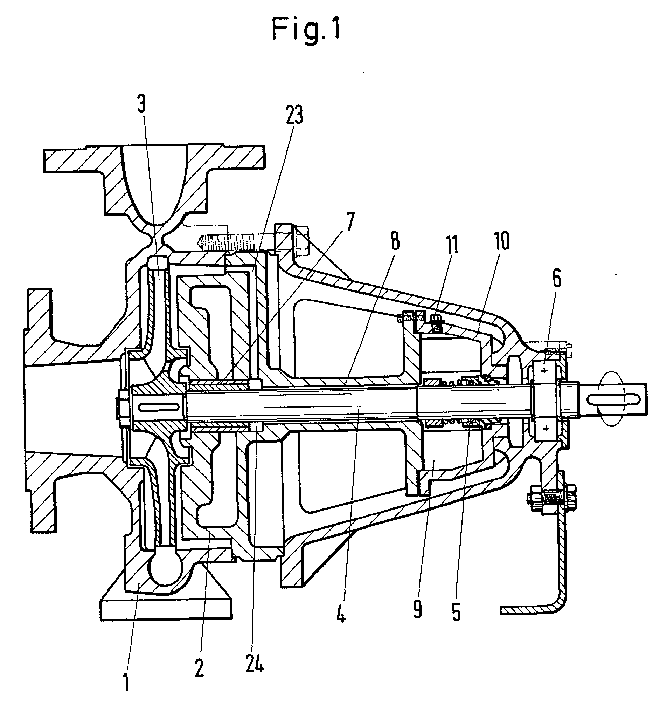

Fig. 1 zeigt eine Kreiselpumpe mit einem Pumpengehäuse bestehend u.a. aus einem Spiralgehäuse 1 und einem Gehäusedeckel 2 sowie dem zugehörigen Laufrad 3 auf einer Welle 4, deren Austritt aus dem Gehäuse durch eine Gleitringdichtung 5 abgedichtet ist. Die Welle 4 ist zum einen in dem außerhalb des Pumpengehäuses angeordneten Wälzlager 6 sowie zum anderen innerhalb des Pumpengehäuses in einem Gleitlager 7 gelagert. Zwischen diesem Lager und in der Gleitringdichtung 5 liegt ein als Distanzstrecke 8 ausgebildeter, rohrförmiger Teil des Gehäusedeckels 2, der die Pumpenwelle 4 mit engem Spalt umgibt. Die Gleitringdichtung 5 befindet sich in einem Dichtungsraum 9 innerhalb eines Dichtungsgehäuses 10, das im geodätisch hochgelegenem Bereich eine Entlüftungseinrichtung 11 aufweist. Der Dichtungsraum ist großvolumig erweitert. Dadurch wird die darin enthaltene Flüssigkeitsmenge ver größert und dadurch die Versorgung der Gleitringdichtung verbessert und die Gasaufnahmemöglichkeit vergrößert. Es wird auch durch die vergrößerte Gehäusefläche eine verstärkte Wärmeabstrahlung erzielt.

Der Gehäusedeckel 2 ist mehrwandig ausgeführt zwecks Vergrößerung des Temperaturgefälles. Er bildet zwei Verbindungen des Dichtungsraums mit dem Förderweg der Pumpe, nämlich erstens durch das drosselnd wirkende Gleitlager 7 mit einem Bereich niederen Drucks und zweitens durch einen besonderen Kanal 23 mit einem Bereich hohen Drucks. Diesen Kanal ist mit dem Raum 24 dichtungsseitig des Gleitlagers 7 verbunden. Durch die Drosselwirkung des Gleitlagers 7, die auch durch eine besondere Drossel erzielt werden könnte, falls an dieser Stelle auf ein Gleitlager verzichtet wird, befindet sich der Raum 24 und damit auch der Dichtungsraum 9 unter hohem Druck. Dadurch wird erreicht, daß die Druckdifferenz zum Atmosphärendruck vergrößert wird und daher eine etwaige Verdampfung des Mediums im Dichtungsspalt nicht oder höchstens weit außen stattfindet und dadurch die Störungswahrscheinlichkeit verringert wird. Ferner wird durch den Anschluß des Kanals 23 an den Raum 24 pumpenseitig der Distanzstrecke 8 erreicht, daß der Strom frischen und gashaltigen Mediums durch den Kanal 23 den Dichtungsraum 9 nicht erreicht und dort somit keine zusätzliche Gasausscheidung stattfindet.

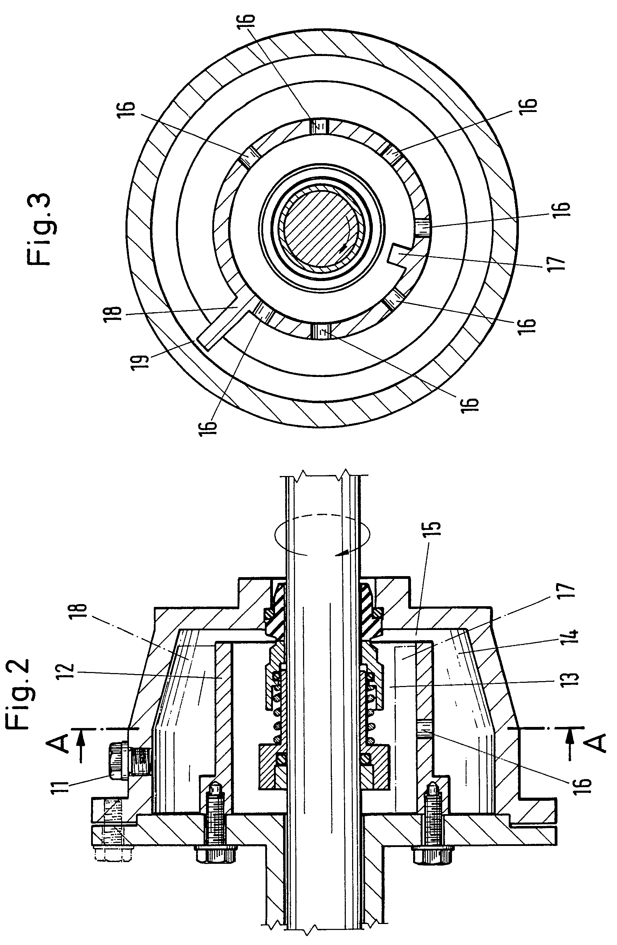

In der Ausführungsform der Dichtungsanordnung gemäß Fig. 2 und 3 ist der Dichtungsraum 9 durch eine vorzugsweise zylindrische Wand 12 in einen inneren Bereich 13 und einen äußeren Bereich 14 unterteilt. Diese sind erstens durch den Ringspalt 15 in der Nähe der Dichtflächen der Gleitringdichtung sowie zweitens in einem davon axial entfernt liegenden Bereich durch Bohrungen 16 miteinander verbunden. Von der Wand 12 ragt im inneren Bereich an geodätisch tief liegender Stelle eine Rippe 17 nach innen, die bis auf wenige Millimeter an den äußeren Umfang der Gleitringdichtung 5 heranreicht und ggf. schräg zur Langsrichtung (nicht achsparellel) verlaufend angeordnet ist, um die Strömungsgeschwindigkeit und die Abstreifwirkung zu verbessern. Im äußeren Bereich 14 geht von der Wand 12 eine Rippe 18 aus, die etwa 45° in Drehrichtung vor dem oberen Scheitelpunkt liegt und bis auf einen schmalen Spalt 19 an die Dichtungsraumwand heranragt, so daß hiereine gehemmte Durchströmung, insbesondere des vor der Rippe angesammelten Gases, stattfinden kann.

Est stellt sich eine Zirkulationsströmung ein, die durch die Bohrungen 16 aus dem inneren in den äußeren Bereich und zurück durch den Spalt 15 auf den Gleitflächenbereich der Gleitringdichtung führt. Die innere Rippe 17 verursacht eine kräftige Turbulenz am Umfang der Gleitringdichtung, so daß dort ausgeschiedene Gasblasen abgerissen und mit der Zirkulationsströmung in den äußeren Bereich 14 geführt werden, der einen größeren Strömungsquerschnitt besitzt und insbesondere in seinem in Fig. 2 links von der Schnittlinie A—A liegenden Bereich stark beruhigt ist, so daß Gase ausgeschieden, nach oben wandern und sich im Schutz der Rippe 19 im Scheitelbereich sammeln können. Dieser Bereich ist durch die Rippe 18 und durch das Fehlen einer Bohrung 16 beruhigt. Das dort sich sammelnde Gas ist daher dem Zirkulationsstrom auf Dauer entzogen. Die Größe dieses Aufnahme des Gases zur Verfügung stehenden Raums ist so bemessen, daß sie für lang dauernden Betrieb ausreicht.

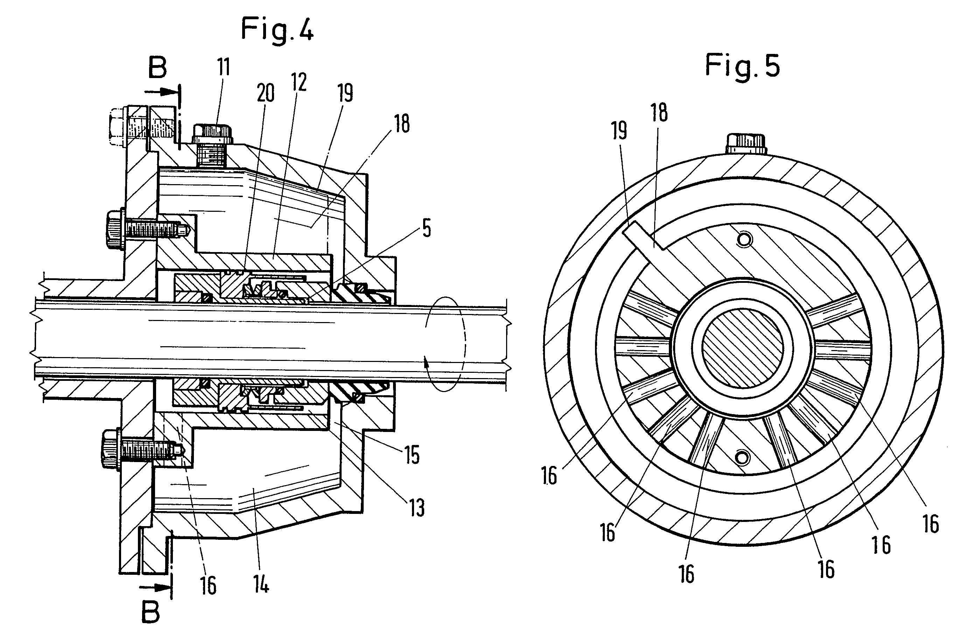

Soweit im folgenden nicht anders beschrieben, gleicht die Ausführung gemäß Fig. 5 derjenigen gemäß Fig. 2 und 3. Die den inneren Bereich 13 vom äußeren Bereich 14 trennende Wand 12 ist nur wenige Millimeter von dem Außenumfang der Gleitringdichtung 5 entfernt. Zwischen einem rotierenden Teil der Gleitringdichtung und der Wand 12 ist ein Fördergewinde 20 vorgesehen. Die Bohrungen 16 zur Verbindung der beiden Bereiche befinden sich in dem Flanschteil der Wand 12. Das Fördergewinde 20 fördert die Flüssigkeit im inneren Bereich zu den Bohrungen 16, so daß es nach dem Passieren des äußeren Bereichs 14 durch den Ringspalt 15 auf den Gleitflächenbereich der Gleitringdichtung gelenkt wird. Die Enge des inneren Bereichs 13 in Verbindung mit der Zwangsdurchströmung sorgt für die Entfernung von Gasausscheidungen von der Gleitringdichtung.

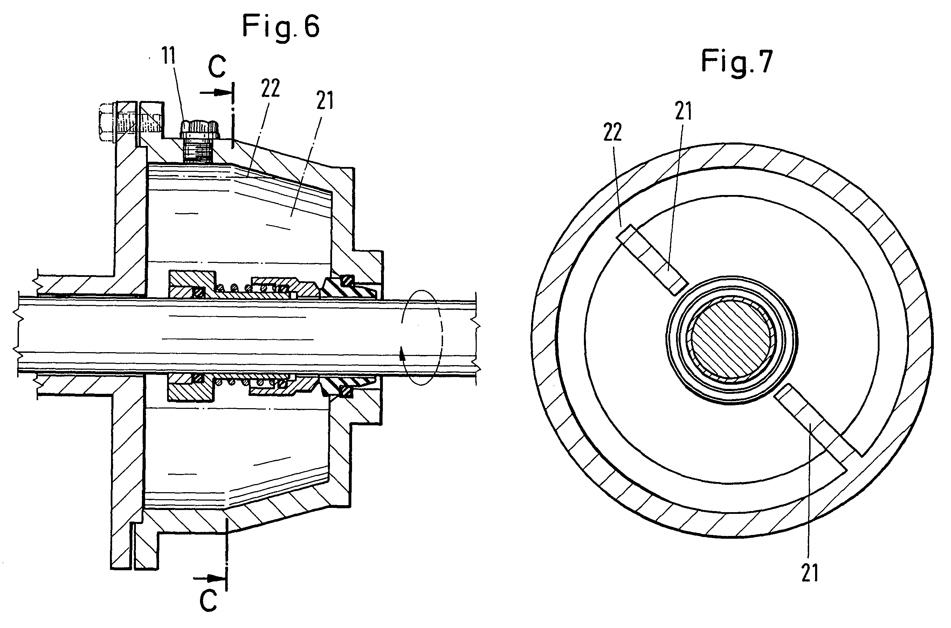

In der Ausführung gemäß Fig. 6 und 7 sind im Gleitringdichtungsraum 9 zwei radiale Rippen 21 angeordnet, die bis auf wenige Millimeter an den äußeren Umfang der Gleitringdichtung 5 heranreichen. Sie enthalten Durchbrechungen 22, die als Bohrungen innerhalb der Rippenfläche und/ oder als Spalt gegenüber der äußeren Dichtungsraumbegrenzung ausgeführt sein können und ein Hindurchströmen von Flüssigkeit und Gas ermöglichen aber die Strömung (zumindest im Scheitelbereich) so beruhigen, daß sich dort das ausgeschiedene Gas sammeln kann. Die Rippen bewirken am Dichtungsumfang kräftige Turbulenz, um dort befindliche Gasausscheidungen fortzureißen. Gleichzeitig bewirken sie in dem radial von der Dichtung entfernten Bereich eine Strömungsberuhigung, so daß das Gas ausgeschieden und zum Scheitelbereich ansteigen kann, um von dort zu gegebener Zeit durch die Entlüftungsöffnungen 11 abgeführt werden zu können.

## Patentansprüche

1. Kreiselpumpe zur Förderung heißer Flüssigkeiten mit mindestens einem Wellendurchtritt durch das Pumpengehäuse (1, 2) nach außen, der mit einer Gleitringdichtung (5) versehen ist, die innerhalb eines die geförderte Flüssigkeit enthaltenden Dichtungsraums (9) angeordnet ist, der von dem Pumpengehäuse (1, 2) durch eine Distanzstrecke (8) mit engem Wellenspiel getrennt ist und Mittel (12, 20, 21) zur Erzeugung einer Flüssigkeitszirkulation innerhalb des Dichtungsraums (9) zum Spülen des Gleitflächenbereichs der Gleitringdichtung (5) umfaßt, gekennzeichnet durch die Kombination der Merkmale, daß

—Mittel (12, 18, 21) zur Beruhigung der Flüssigkeitszirkulation in Entfernung von der Gleitringdichtung (5),
—ein großvolumiger, strömungsberuhigter, entlüftbarer Aufnahmeraum für abgeschiedenes Gas und
—Einrichtungen (11) zum Entfernen von angesammeltem Gas vorgesehen sind.

2. Kreiselpumpe nach Anspruch 1, dadurch gekennzeichnet, daß der Dichtungsraum (9) in einen inneren (13) und einen äußeren Bereich (14) unterteilt ist, die eine Verbindung (15) nahe der Gleitfläche der Gleitringdichtung (5) und eine davon entfernte Verbindung (16) aufweisen.

3. Kreiselpumpe nach Anspruch 1 oder 2, dadurch gekennzeichnet, daß mindestens eine bis auf geringe Entfernung an den Umfang der Gleitringdichtung (5) herangeführte Rippe (17, 21) vorgesehen ist.

4. Kreiselpumpe nach Anspruch 3, dadurch gekennzeichnet, daß die Rippe (17, 21) unterhalb der Wellenhöhe angeordnet ist.

5. Kreiselpumpe nach Anspruch 2 oder 3, dadurch gekennzeichnet, daß die Rippe (17, 21) schräg zur Axialrichtung verläuft.

6. Kreiselpumpe nach einem der Ansprüche 1 bis 5, dadurch gekennzeichnet, daß mehrere von der Dichtungsraumwand an die Gleitringdichtung (5) heranragende Rippen (21) vorgesehen sind.

7. Kreiselpumpe nach einem der Ansprüche 3 bis 6, dadurch gekennzeichnet, daß die Rippen (21) Durchbrechungen enthalten.

8. Kreiselpumpe nach einem der Ansprüche 1 bis 5, dadurch gekennzeichnet, daß der innere (13) und der äußere Bereich (14) durch eine im wesentlichen rohrförmige Wand (12) getrennt sind.

9. Kreiselpumpe nach Anspruch 8, dadurch gekennzeichnet, daß zwischen der Wand (12) und einem mit der Gleitringdichtung (5) rotierenden Teil ein Fördergewinde (20) angeordnet ist.

10. Kreiselpumpe nach einem der Ansprüche 6 bis 9, dadurch gekennzeichnet, daß der äußere Bereich (14) mindestens eine quer zur Umfangsrichtung verlaufende Rippe (18, 21) oberhalb der Wellenhöhe enthält, die einen kleinen Durchtrittsquerschnitt (19, 22) frei läßt.

11. Kreiselpumpe nach Anspruch 10, dadurch gekennzeichnet, daß die Rippe (18, 21) in Drehrichtung vor dem Scheitel angeordnet ist.

12. Kreiselpumpe nach Anspruch 10 oder 11, dadurch gekennzeichnet, daß der kleine Durchtrittsquerschnitt ein außen gelegener Spalt (19, 22) ist.

13. Kreiselpumpe nach einem der Ansprüche 1 bis 12, dadurch gekennzeichnet, daß der Dichtungsraum (9) an einem Bereich hohen Drucks in der Pumpe angeschlossen ist und seine etwaige Verbindung mit einem Bereich niedrigen Drucks eine Drossel (7) enthält.

14. Kreiselpumpe nach Anspruch 13, dadurch gekennzeichnet, daß die Verbindung mit dem Bereich hohen Drucks pumpenseitig von der Distanzstrecke (8) mündet.

15. Kreiselpumpe nach einem der Ansprüche 1 bis 14, dadurch gekennzeichnet, daß an dem Dichtungsraum (9) ein Entlüftungstopf mit Entlüftungseinrichtung angeordnet ist.

16. Kreiselpumpe nach einem der Ansprüche 1 bis 15, dadurch gekennzeichnet, daß der Dichtungsraum (9) bzw. der Entlüftungstopf einen Sensor zur Überwachung der Betriebsverhältnisse enthält.

**Revendications**

1. Pompe centrifuge pour débiter des liquides chauds, comportant au moins un passage d'arbre traversant le carter de pompe (1, 2) vers l'extérieur et qui est pourvu d'une garniture d'étanchéité (5) à bague de glissement, qui est disposée à l'intérieur d'une chambre d'étanchéité (9) contenant le liquide débité et qui est séparée du carter de pompe (1, 2) par un segment d'espacement (8), avec un jeu étroit par rapport à l'arbre et des moyens (12, 20, 21) pour produire une circulation de liquide à l'intérieur de la chambre d'étanchéité (9) en vue du lavage de la zone de surface de glissement de la garniture d'étanchéité (5) à bague de glissement, caractérisée par la combinaison des particularites consistant en ce qu'il est prevu:
— des moyens (12, 18, 21) pour calmer la circulation du liquide à distance de la garniture d'étanchéité (5) à bague de glissement,
— une chambre réceptrice pour le gaz séparé, cette chambre ayant un grand volume, étant stabilisée en écoulement et pouvant être désaérée, et
— des dispositifs (11) pour évacuer le gaz collecté.

2. Pompe centrifuge selon la revendication 1, caractérisée en ce que la chambre d'étanchéité (9) est divisée en une zone intérieure (13) et une zone extérieure (14), qui comportent une intercommunication (15) proche de la surface de glissement de la garniture d'étanchéité (5) à bague de glissement et une intercommunication (16) éloignée de cette garniture.

3. Pompe centrifuge selon la revendication 1 ou 2, caractérisée en ce qu'il est prévu au moins une nervure (17, 21) qui s'approche jusqu'à une faible distance de la périphèrie de la garniture d'étanchéité (5) à bague de glissement.

4. Pompe centrifuge selon la revendication 3, caractérisée en ce que la nervure (17, 21) est disposée en dessous du niveau de l'arbre.

5. Pompe centrifuge selon la revendication 2 ou 3, caractérisée en ce que la nervure (17, 21) s'étend obliquement par rapport à la direction axiale.

6. Pompe centrifuge selon l'une quelconque des revendications 1 à 5, caractérisée en ce qu'il est prévu plusieurs nervures (21) partant de la paroi de la chambre d'étanchéité et se rapprochant de la garniture d'étanchéité (5) à bague de glissement.

7. Pompe centrifuge selon l'une quelconque des revendications 3 à 6, caractérisée en ce que les nervures (21) comportent des découpures.

8. Pompe centrifuge selon l'une quelconque des revendications 1 à 5, caractérisée en ce que la zone intérieure (13) et la zone extérieure (14) sont séparées par une paroi (12) de forme sensiblement tubulaire.

9. Pompe centrifuge selon la revendication 8, caractérisée en ce qu'il est prévu entre la paroi (12) et une partie, tournant avec la garniture d'étanchéité (5) à bague de glissement, un filetage transporteur (20).

10. Pompe centrifuge selon l'une quelconque des revendications 6 à 9, caractérisée en ce que la zone extérieure (14) comporte, au-dessus du niveau de l'arbre, au moins une nervure (18, 21) s'étendant transversalement par rapport à la direction périphérique et qui laisse libre une petite section de passage (19, 22).

11. Pompe centrifuge selon la revendication 10, caractérisée en ce que la nervure (18, 21) est disposée avec le point haut en considérant le sens de rotation.

12. Pompe centrifuge selon la revendication 10 ou 11, caractérisée en ce que la petite section de passage est un interstice (19, 22) disposé extérieurement.

13. Pompe centrifuge selon l'une quelconque des revendications 1 à 12, caractérisée en ce que la chambre d'étanchéité (9) est reliée à une zone de haute pression dans la pompe et sa liaison éventuelle avec une zone de basse pression contient en étranglement (7).

14. Pompe centrifuge selon la revendication 13, caractérisée en ce que la liaison avec la zone de haute pression débouche à l'extrémité, côté pompe, du segment d'espacement (8).

15. Pompe centrifuge selon l'une quelconque des revendications 1 à 14, caractérisée en ce qu'il est prévu dans la chambre d'étanchéité (9) un pot de désaération comportant un dispositif de désaération.

16. Pompe centrifuge selon l'une quelconque des revendications 1 à 15, caractérisée en ce que la chambre d'étanchéité (9) ou le pot de désaération contient un détecteur servant à contrôler les conditions de marche.

**Claims**

1. A centrifugal pump for delivering hot liquids, having at least one shaft passage through the pump housing (1, 2) to the outside, which is provided with an axial ring seal (5) disposed inside a sealing chamber (9) which contains the delivered liquid and which is separated from the pump housing (1, 2) by a spacing section (8) with narrow shaft clearance, and comprises means (12, 20, 21) for creating a circulation of liquid inside the sealing chamber (9) for flushing the sliding surface zone of the axial ring seal (5), characterised by the provision in combination of the following features
— means (12, 18, 21) for stabilising the circulation of liquid at a distance from the axial ring seal (5),
— a receiving chamber for separated gas, which is of large-capacity, has stabilised flow and which can be vented, and

—devices (11) for removing accumulated gas.

2. A centrifugal pump according to Claim 1, characterised in that the sealing chamber (9) is divided into an inner zone (13) and an outer zone (14), which have a connection (15) near to the sliding surface of the axial ring seal (5) and a connection (16) remote therefrom.

3. A centrifugal pump according to Claim 1 or 2, characterised in that at least one rib (17, 21) is provided which extends to a slight distance from the periphery of the axial ring seal (5).

4. A centrifugal pump according to Claim 3, characterised in that the rib (17, 21) is disposed below shaft level.

5. A centrifugal pump according to Claim 2 or 3, characterised in that the rib (17, 21) extends at an angle to the axial direction.

6. A centrifugal pump according to any one of Claims 1 to 5, characterised in that a plurality of ribs (21) are provided projecting from the sealing chamber wall towards the axial ring seal (5).

7. A centrifugal pump according to any one of Claims 3 to 6, characterised in that the ribs (21) contain perforations.

8. A centrifugal pump according to any one of Claims 1 to 5, characterised in that the inner zone (13) and the outer zone (14) are separated by a substantially tubular wall (12).

9. A centrifugal pump according to Claim 8, characterised in that a delivery screwthread (20) is provided between the wall (12) and a member rotating with the axial ring seal (5).

10. A centrifugal pump according to any one of Claims 6 to 9, characterised in that the outer zone (14) includes at least one rib (18, 21) which extends transversly to the peripheral direction above shaft level and which leaves free a passage (19, 22) of small cross-section.

11. A centrifugal pump according to Claim 10, characterised in that the rib (18, 21) is disposed in the direction of rotation upstream of the crown.

12. A centrifugal pump according to Claim 10 or 11, characterised in that the passage of small cross-section is an outwardly disposed gap (19, 22).

13. A centrifugal pump according to any one of Claims 1 to 12, characterised in that the sealing chamber (9) is connected to a high-pressure zone in the pump and its possible connection with a low-pressure zone includes a restrictor (7).

14. A centrifugal pump according to Claim 13, characterised in that the connection with the high-pressure zone discharges on the pump side of the spacing section (8).

15. A centrifugal pump according to any one of Claims 1 to 14, characterised in that a venting plug with a venting device is provided in the sealing chamber (9).

16. A centrifugal pump according to any one of Claims 1 to 15, characterised in that the sealing chamber (9) and/or the venting plug includes a sensor for monitoring the operating conditions.

# Fig.1

Fig.3

Fig.2

2

Fig.4

Fig.5

EP 0 327 549 B1

Fig.7

Fig.6

4